# EUROPÄISCHE PATENTANMELDUNG

(11) **EP 1 661 806 A1**
(43) Veröffentlichungstag der Anmeldung: **31.05.2006**
(21) Anmeldenummer: 04028110.7
(22) Anmeldetag: 26.11.2004
(51) Int. Cl.: B64D 13/00, F24F 13/062

(54) **Luftauslassvorrichtung für den Innenraum eines Fahrzeuges**

(71) Anmelder: Goodrich Lighting Systems GmbH, 59557 Lippstadt (DE)
(72) Erfinder: Thomassin, Stefan, 59555 Lippstadt (DE); Seume, Jörg, 29362 Hohne (DE); Steglich, Tom, 18236 Kröpelin (DE)
(74) Vertreter: Hilleringmann, Jochen

(57) **Zusammenfassung**

Die Luftauslassvorrichtung (10) für den Innenraum eines Fahrzeuges, insbesondere zur Anordnung oberhalb eines Sitzplatzes eines Fahrzeuges wie z.B. Flugzeug, Bus o.dgl., ist versehen mit einem Luftauslasselement (38), das zwei diametral gegenüberliegende Lufteinlassöffnungen (44) und eine Luftauslassöffnung (45) aufweist. Ferner weist die Luftauslassvorrichtung (10) ein Schieberelement (46), das zum Verschließen und Freigeben der Lufteinlassöffnungen (44) diesen zugeordnete Schieberbereiche (48) aufweist, und ein an der Luftauslassöffnung (45) angeordneten, einen Kragen aufweisenden Betätigungselement (30) zum Bewegen des Schieberelements (46) auf. Das Betätigungselement (30) ist um eine Längsachse (50) des Kragens drehbar gelagert. Die Schieberbereiche (48) des Schieberelements (46) sind bei Drehung des Betätigungselements (30) zum Verschließen und Freigeben der ihnen zugeordneten Luftauslassöffnungen (45) längs einer Kurvenbahn bewegbar. Das Luftauslasselement (38) weist eine Trennwand (62) auf, die die Lufteinlassöffnungen (44) zur Trennung von durch diese gelangenden Teilluftströmungen voneinander abschirmt und die sich bis zur Luftauslassöffnung (45) erstreckt.

## Beschreibung

Die Erfindung betrifft eine Luftauslassvorrichtung für den Innenraum eines Fahrzeuges und insbesondere zur Anordnung oberhalb eines Sitzplatzes eines Fahrzeuges, bei dem es sich beispielsweise um ein Flugzeug, Bus oder ein anderes Massenverkehrsmittel handelt.

Zur Zufuhr von Luft sind in Fahrzeuginnenräumen diverse Luftauslassvorrichtungen bekannt. Oberhalb von Sitzplätzen in beispielsweise Flugzeugen oder Bussen befinden sich einstellbare Luftauslassdüsen, die in einem kugelförmigen Halteelement schwenkbar gelagert sind. Eine derartige Luftauslassvorrichtung ist beispielsweise in US-A-5 399 119 beschrieben. Bei diesem bekannten Luftauslass wird ein Verschlusselement bei Drehung eines Betätigungselements axial verschoben, so dass eine ringförmige Luftauslassöffnung in ihrem Querschnitt veränderbar ist.

Eine weitere bekannte Luftauslassvorrichtung weist einen Luftauslasskanal auf, in dem nach Art einer Drosselklappe eine verschwenkbare Klappe drehbar gelagert ist. Durch Drehen eines kragenförmigen Betätigungselements, das an der Luftauslassöffnung angeordnet ist und über das die Klappe verschwenkbar ist, lässt sich die Intensität des Luftstromes beeinflussen. Bei schräg gestellter Klappe entsteht eine ungewollte Luftstrom-Ablenkung.

Beiden zuvor genannten Konstruktionen gemeinsam ist, dass auch bei vollständig geöffneter Luftauslassvorrichtung der Luftauslasskanal durch in diesem eingebaute Verschlusselemente beträchtlich in seinem Gesamtquerschnitt eingeschränkt ist. Um im vollständig geöffneten Zustand eine geforderte Mindestluftmenge austragen zu können, ist es daher erforderlich, den eigentlichen Luftauslasskanal bzw. die eigentliche Luftauslassöffnung zu vergrößern. Dies ist teilweise ästhetisch weniger ansprechend und erfordert erhöhten Einbauplatzbedarf, was beides unerwünscht ist.

Aus DE-B-1 218 892 ist ein weiteres Design einer Luftauslassvorrichtung bekannt, die einen axial verschiebbaren Luftauslassstutzen aufweist. Dieser Luftauslassstutzen arbeitet mit radialen Lufteinlassöffnungen zusammen und wirkt nach Art eines Schiebers, der durch axiale Bewegung verschiedene Lufteinlassöffnungen verschließt bzw. freigibt, wodurch entweder lediglich durch den Auslassstutzen hindurch oder außerhalb des Auslassstutzens oder sowohl durch den Auslassstutzen als auch außerhalb des Auslassstutzens Luft ausgelassen werden kann.

Eine Aufgabe der Erfindung ist es, eine Luftauslassvorrichtung zu schaffen, die bei möglichst geringem Luftauslassöffnungsquerschnitt dennoch eine ausreichende Menge an Luft ausgeben kann. Ferner soll der Aufbau dieser Luftauslassvorrichtung konstruktiv einfach gestaltet sein. Schließlich muss das Design so gewählt werden, dass die Entstehung störender Strömungsgeräusche unterbunden wird.

Zur Lösung dieser Aufgabe wird mit der Erfindung eine Luftauslassvorrichtung für den Innenraum eines Fahrzeuges, insbesondere zur Anordnung oberhalb eines Sitzplatzes eines Fahrzeuges wie beispielsweise Flugzeug, Bus o.dgl. vorgeschlagen, wobei die Luftauslassvorrichtung versehen ist mit
- einem Luftauslasselement, das zwei diametral gegenüberliegende Lufteinlassöffnungen und eine Luftauslassöffnung aufweist,
- einem Schieberelement, das zum Verschließen und Freigeben der Lufteinlassöffnungen diesen zugeordnete Schieberbereiche aufweist, und
- einem an der Luftauslassöffnung angeordneten, einen Kragen aufweisenden Betätigungselement zum Bewegen des Schieberelements, wobei
- das Betätigungselement um eine Längsachse des Kragens drehbar gelagert ist,
- die Schieberbereiche des Schieberelements bei Drehung des Betätigungselements zum Verschließen und Freigeben der ihnen zugeordneten Luftauslassöffnungen längs einer Kurvenbahn bewegbar sind und
- das Luftauslasselement eine Trennwand aufweist, die die Lufteinlassöffnungen zur Trennung von durch diese gelangenden Teilluftströmungen voneinander abschirmt und die sich bis zur Luftauslassöffnung erstreckt.

Die erfindungsgemäße Luftauslassvorrichtung weist ein Luftauslasselement auf, das zwei diametral gegenüberliegende Lufteinlassöffnungen für die Zufuhr von Luft und eine Luftauslassöffnung für den Auslass der zugeführten Luft aufweist. In diesem Luftauslasselement befindet sich ein drehbares Schieberelement, das um die Längsachse des Luftauslasselements drehbar gelagert ist und zwei Schieberbereiche aufweist, die dem Verschließen bzw. Freigeben der zwei Lufteinlassöffnungen dienen. An der Luftauslassöffnung des Luftauslasselements ist ein Betätigungselement angeordnet, dass nach Art eines Kragens ausgebildet ist und insbesondere mit Griffmulden o.dgl. die Handbetätigung erleichternden Merkmalen versehen ist. Durch Drehen des kragenförmigen Betätigungselements lässt sich das Schieberelement verdrehen. Dabei bewegen sich die Schieberbereiche des Schieberelements längs jeweils einer Kurvenbahn.

Das Luftauslasselement weist bis auf die beiden Lufteinlassöffnungen und die Luftauslassöffnung keinerlei Öffnungen auf, die dem Eintritt von dem Innenraum zuzuführender Luft dienen. Bei dem Luftauslasselement handelt es sich vorzugsweise um einen rotationssymmetrischen Körper, der vorzugsweise eine zylindrische oder eine konische bzw. kegelförmige Mantelwand aufweist. In der Mantelwand sind die beiden diametral gegenüberliegenden Lufteinlassöffnungen ausgebildet. In einer ersten Drehposition des Betätigungselements verschließen die Schieberbereiche des Schieberelements die beiden Lufteinlassöffnungen, während die Schieberbereiche des Schieberelements in einer zweiten Drehstellung diese Lufteinlassöffnungen im wesentlichen vollständig freigeben. Die Schieberbereiche des Schieberelements und die Wandung des Luftauslasselements sind an zumindest einer Seite der Lufteinlassöffnung parallel zueinander angeordnet. Dieser Wandbereich des Luftauslasselements bzw. die Schieberbereiche sind als Teile von rotationssymmetrischen Wandungen (z.B. Zylinderwandung oder konische Wandung) ausgebildet.

Ein bevorzugtes Ausführungsbeispiel der Erfindung ist in der Ausbildung des Luftauslasselements als kegelförmiges Element mit zwei diametral angeordneten und sich über die Höhe der Kegelwandung erstreckenden Lufteinlassöffnungen zu sehen. Der Vorteil dieser Anordnung besteht darin, dass nunmehr Luft einer Luftströmung, die in axialer Richtung auf das verjüngte Ende des kegelstumpfförmigen Luftauslasselements auftrifft, im wesentlichen ohne Umlenkung der Luftströmung von der Außenseite des Luftauslasselements zu dessen Innenraum gelangt, durch den es über die Luftauslassöffnung wieder austritt. Hierdurch ergeben sich extrem günstige Strömungsverhältnisse, die Nebengeräusche unterdrücken. Durch die Anordnung der beiden Lufteinlassöffnungen lassen sich damit günstige Öffnungsquerschnitte realisieren. So ist es beispielsweise möglich, dass die Gesamtfläche sämtlicher derart gestalteter Lufteinlassöffnungen mehr als das 1 1/2-fache der Querschnittsfläche der Luftauslassöffnung beträgt. Damit ist also einzig und allein die Dimensionierung der Luftauslassöffnung entscheidend für den maximal möglichen Luftdurchsatz. Diesen maximal möglichen Luftdurchsatz beeinträchtigende Bauelemente sind bei der erfindungsgemäßen Luftauslassvorrichtung in dem Luftzuführungskanal im Bereich des Luftauslasselements also nicht mehr gegeben. Das Verschlusselement, nämlich das Schieberelement, ist im vollständig geöffneten Zustand der Lufteinlassöffnung durch einen Teil des Luftauslasselements verdeckt, beeinträchtigt also den Luftstrom nicht.

Des weiteren wirkt sich die erfindungsgemäß vorgesehene Trennwand geräuschmindernd auf die Luftströmung aus. Diese Trennwand verläuft quer zwischen den beiden Luftauslassöffnungen innerhalb des Luftauslasselements; mit anderen Worten trennt die Trennwand das Innere des Luftauslasselements in zwei Halbräume, wobei in jeden dieser Halbräume über die diesem zugeordnete Lufteinlassöffnung eine Luftströmung einströmen kann. Die Trennwand verläuft im wesentlichen bis zur Luftauslassöffnung und unterteilt diese in zwei Teilöffnungen, von denen jede einem anderen der beiden Halbräume zugeordnet ist.

Durch die Ausbildung der Trennwand wird verhindert, dass die beiden über die Lufteinlassöffnung einströmenden Teilluftströme innerhalb des Luftauslasselements nicht aufeinander treffen, sondern vielmehr parallel zueinander gerichtet werden. Mit anderen Worten treten also diese beiden Teilluftströme quasi parallel aus der Luftauslassöffnung heraus. Insgesamt ist damit ein geräuscharmes Design gegeben.

Zur weiteren Vergleichmäßigung der Teilluftströme ist es von Vorteil, wenn an der Trennwand mindestens ein zylindrisches Ringelement gehalten ist, wobei die Trennwand im wesentlichen längs des Durchmessers dieses Ringelements verläuft. Das Ringelement ist zweckmäßigerweise an seinem den Lufteinlassöffnungen zugewandten Rand verjüngend bzw. spitz zulaufend ausgebildet, was sich insofern strömungstechnisch vorteilhaft auswirkt, als die Verwirbelungen beim Auftreffen der Luftströmung auf das Ringelement minimiert sind. Zweckmäßig ist es, zwei derartige Ringelemente vorzusehen, die konzentrisch zueinander angeordnet sind. Bei Ausbildung des Luftauslasselements als Hohlkegelelement sind die Ringelemente in unterschiedlichen Abständen zur Luftauslassöffnung angeordnet und konzentrisch zueinander. Durch die Ringelemente entstehen zwischen diesen (nur bei mehreren Ringelementen gegeben) und zur Trennwand als auch zur Wandung des Luftauslasselements hin geführte Teilströmungen. All dies wirkt sich strömungstechnisch und insbesondere geräuschmindernd aus.

Neben den strömungstechnisch günstigen Eigenschaften (keine Strömungsumlenkung und keine Prallflächen durch das Schieberelement in geöffnetem Zustand der Lufteinlassöffnung bzw. Lufteinlassöffnungen) ist der im wesentlichen zweiteilige Aufbau der Luftauslassvorrichtung extrem einfach und übersichtlich und damit montagefreundlich sowie wartungsfreundlich und funktionszuverlässig.

Die erfindungsgemäße Luftauslassvorrichtung lässt sich entweder starr oder verschwenkbar (über ein Kugelkopfgelenk) anordnen.

Die Erfindung wird nachfolgend unter Bezugnahme auf die Zeichnung anhand eines Ausführungsbeispiels näher erläutert. Im einzelnen zeigen:
- Fig. 1: eine Seitenansicht der Luftauslassvorrichtung zur Belüftung eines Sitzplatzes in einem Fahrzeug, wie beispielsweise einem Flugzeug oder Bus, mit angedeutetem Deckenpaneel,
- Fig. 2: eine perspektivische und teilweise aufgebrochene Darstellung der Luftauslassvorrichtung zur Verdeutlichung ihres Innenlebens,
- Fig. 3: eine Ansicht der Luftauslassvorrichtung in Luftströmungsrichtung und
- Fig. 4: eine Ansicht der Luftauslassvorrichtung entgegengesetzt zur Strömungsrichtung.

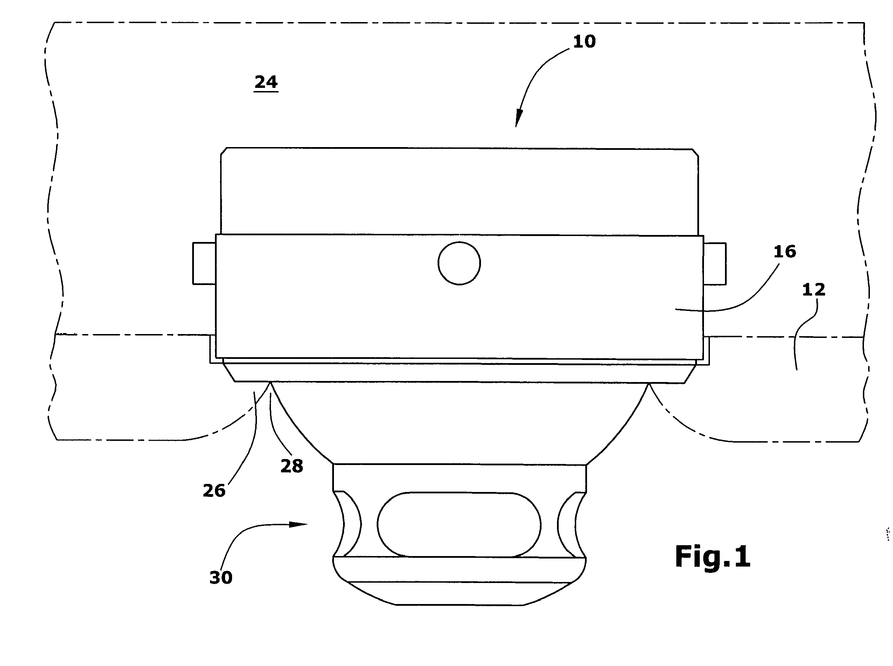

In den Fign. 1 bis 4 ist der Aufbau einer Luftauslassvorrichtung 10 sowie das Zusammenspiel der einzelnen Komponenten dieser Luftauslassvorrichtung 10 dargestellt. Gemäß Fig. 1 ist die Luftauslassvorrichtung 10 in der Deckenverkleidung 12 oberhalb eines Fahrgastsitzes in beispielsweise einem Flugzeug oder Bus angeordnet. Durch manuelle Betätigung der Luftauslassvorrichtung 10 lässt sich die Intensität und Richtung einer Luftströmung verändern.

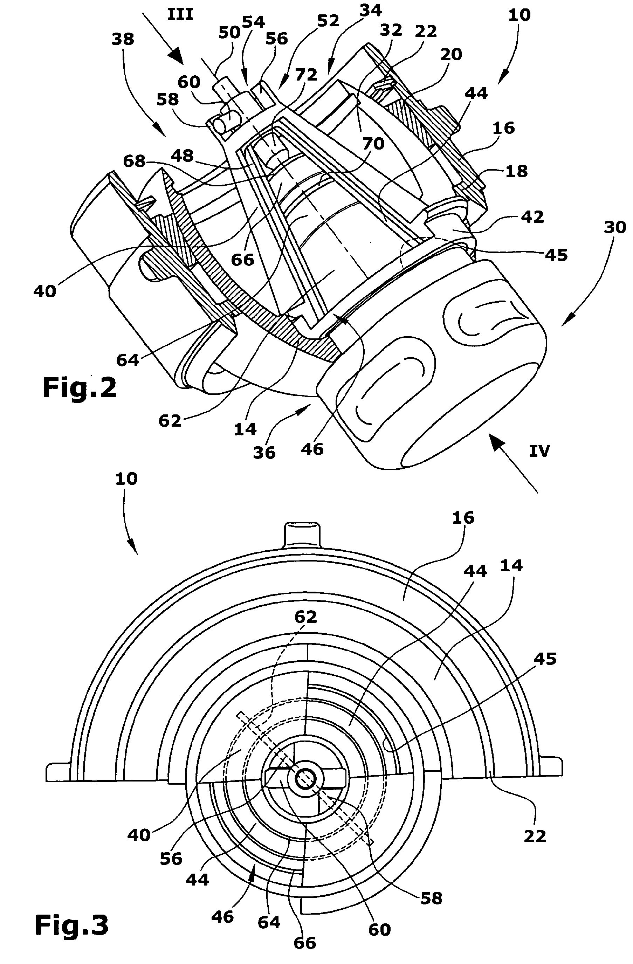

Die Luftauslassvorrichtung 10 weist ein kugelförmiges Halteelement 14 auf, das innerhalb eines Raumwinkelbereichs, der bezüglich seiner Größe konstruktiv bedingt ist, schwenkbar in einem zylindrischen Aufnahmeelement 16 gelagert ist. Dieses Aufnahmeelement 16 ist nach Art einer Hülse aufgebaut und weist an seinem auf der Deckenverkleidung 12 aufliegenden Ende einen Innenflansch 18 (siehe Fig. 2) auf, der an der sphärischen Außenseite des kugelförmigen Halteelements 14 anliegt. An der Innenseite des Aufnahmeelements 16 ist an diesem ein Lagerelement (siehe Fig. 2) angeordnet, dessen an dem Aufnahmeelement 16 anliegende Außenseite zylindrisch und dessen an dem Halteelement 14 anliegende Seite sphärisch konkav ausgebildet ist. Dieses Lagerelement 20 dient nicht nur der Lagerung des kugelförmigen Halteelements 14 sondern auch dem luftdichten Abschluss des Zwischenraums zwischen Aufnahmeelement 16 und Halteelement 14. Das Lagerelement 20 ist in seiner Einbauposition gemäß Fig. 2 durch einen gewellten Federring (nicht dargestellt) vorgespannt, der sich einerseits an dem Lagerelement 20 und andererseits an einem am Aufnahmeelement 16 gesicherten Sicherungsring 22 abstützt.

Wie in Fig. 1 gezeigt, befindet sich das Lagerelement 20 in einer mit Druckluft versorgten Kammer bzw. einem Schacht 24 und liegt an seinem mit dem Innenflansch 18 versehenen Ende dichtend an dem Rand 26 einer Öffnung 28 der Deckenverkleidung 12 an. Aus der Öffnung 28 ragt somit ein Teil des kugelförmigen Halteelements 14 sowie ein Betätigungselement 30 zur Einstellung der Intensität und Richtung der Luftströmung heraus.

Gemäß Fig. 2 weist das Halteelement 14 einen zylinderförmigen Durchlass 32 auf, dessen eines Ende 34 in den Schacht 24 hineinragt und an dessen anderen Ende 36 das Betätigungselement 30 angeordnet ist. Im Innern des Durchlasses 32 befindet sich ein Luftauslasselement 38, das im wesentlichen eine konusförmige Wandung 40 mit einem zylindrischen Kragen 42 aufweist. Der zylindrische Kragen 42 befindet sich an dem Ende 36 des Halteelements 14, an dem sich auch das Betätigungselement 30 befindet. Damit ragt das Luftauslasselement 38 kegelförmig und entgegengesetzt zur Strömungsrichtung in den Durchlass 32 hinein.

Die kegelförmige Wandung 40 des Luftauslasselements 38 ist mit zwei trapezförmigen Lufteinlassöffnungen 44 versehen, die diametral gegenüberliegend angeordnet sind. Die Fläche jeder Lufteinlassöffnung 44 beträgt im wesentlichen ein Vierteil der kegelförmigen Gesamtwandung 40. Die Grundfläche der Konusform des Luftauslasselements 38 bildet eine Luftauslassöffnung 45.

Im Innern des Luftauslasselements 38 ist ein Schieberelement 46 angeordnet, das zwei Schieberbereiche 48 aufweist, die bei Rotation des ebenfalls im wesentlichen kegelförmigen Schieberelements 46 in Überdeckung mit den Lufteinlassöffnungen 44 gebracht werden können. Das Schieberelement 46 ist mit dem kragenförmigen Betätigungselement 30 vorzugsweise integral ausgebildet, lässt sich also um die Längsachse 50 des Luftauslasselements 38 in diesem verdrehen.

Durch die kegelförmige bzw. kegelstumpfförmige Ausbildung sowohl des Luftauslasselements 38 als auch des Schieberelements 46 wird unter Berücksichtigung von vorzusehenden Fertigungstoleranzen zuverlässig erreicht, dass die Schieberbereiche 48 die Lufteinlassöffnungen 44 zuverlässig dicht verschließen. Denn dadurch, dass die beiden konischen Element axial zusammengebracht werden, kommt es immer zu einer flächigen und damit luftdichten Anlage der Schieberbereiche 48 mit den noch verbleibenden Bereichen der kegelförmigen Wandung 40 des Luftauslasselements 38.

An ihren verjüngten Enden 52 bzw. 54 lassen sich die beiden Elemente (Luftauslasselement 38 und Schieberelement 46) miteinander verbinden. In diesem Bereich kann auch durch das Vorsehen von Anschlagelementen 56,58 an dem Luftauslasselement 38 und einem korrespondierenden Anschlagelement 60 an dem Schieberelement 46 der maximal zulässige Verdrehbereich des Betätigungselements 30 zum vollständigen Öffnen der Lufteinlassöffnungen 44 und zum vollständigen Verschließen der Lufteinlassöffnungen 44 festlegen.

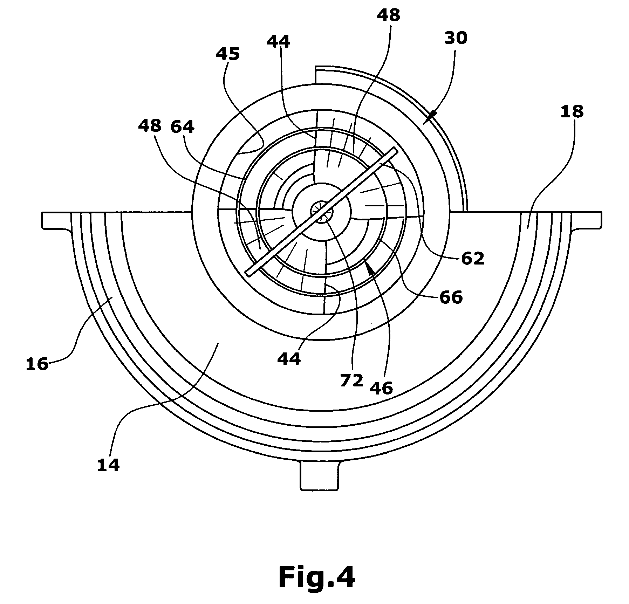

Zur Verdeutlichung des zuvor anhand der Fig. 2 beschriebenen inneren Aufbaus der Luftauslassvorrichtung 10 sind in den Fign. 3 und 4 weitere Ansichten der Luftauslassvorrichtung 10 gezeigt.

Wie in den Figuren gezeigt (siehe insbesondere die Fign. 2 bis 4), ist in das Luftauslasselement 38 eine Trennwand 62 eingesetzt, die die beiden Lufteinlassöffnungen 44 gegeneinander abschirmt. Die Trennwand 62 bildet in der Darstellung gemäß Fig. 4 die Symmetrieachse für die diametral gegenüberliegend angeordneten Lufteinlassöffnungen 44. Von der Trennwand 62 sind zwei zylindrische Ringelemente 64,66 gehalten, wobei die Trennwand 62 sich im wesentlichen längs der Durchmesser dieser zylindrischen Ringelemente 64,66 erstreckt. Die Ringelemente 64,66 sind in unterschiedlichen Abständen zur Luftauslassöffnung 45 angeordnet.

In den Fign. 2 bis 4 ist die Trennwand 62 als an den Schieberbereichen 48 des Schieberelements 46 gehalten gezeigt. Das Schieberelement 46 kann aber auch außerhalb der konusförmigen Wandung 40 des Luftauslasselements 38 angeordnet sein, so dass in diesem Fall dann die Trennwand 62 innen an der konusförmigen Wandung 40 angrenzt. Diese zuletzt genannte Variante ist insofern bevorzugt, als sich die Trennwand 62 in jeder Öffnungsstellung des Schieberelements 46 stets in gleicher Weise zwischen den Lufteinlassöffnungen 44 des Luftauslasselements 38 befindet.

Die Trennwand 62 dient der Führung und Trennung der über die Lufteinlassöffnungen 44 einströmenden Luft. Die Trennwand 62 ragt bis in die Auslassöffnung 45 hinein. Die Ringelemente 64,66 sind an ihren der Luftauslassöffnung 45 abgewandten Rändern 68,70 verjüngend ausgebildet. An seinem der Luftauslassöffnung 45 abgewandten Ende kann die Trennwand 62 einen über die einander gegenüberliegenden Seiten der Trennwand 62 überstehenden Zapfen bzw. eine Verdickung 72 aufweisen, die auch zugleich als Lagerung der Trennwand 62 an dem Schieberelement 46 bzw. an der Stirnseite der konusförmigen Wandung 40 des Luftauslasselements 38 dient.

## Patentansprüche

1. Luftauslassvorrichtung für den Innenraum eines Fahrzeuges, insbesondere zur Anordnung oberhalb eines Sitzplatzes eines Fahrzeuges wie z.B. Flugzeug, Bus o.dgl., mit
- einem Luftauslasselement (38), das zwei diametral gegenüberliegende Lufteinlassöffnungen (44) und eine Luftauslassöffnung (45) aufweist,
- einem Schieberelement (46), das zum Verschließen und Freigeben der Lufteinlassöffnungen (44) diesen zugeordnete Schieberbereiche (48) aufweist, und
- einem an der Luftauslassöffnung (45) angeordneten, einen Kragen aufweisenden Betätigungselement (30) zum Bewegen des Schieberelements (46), wobei
- das Betätigungselement (30) um eine Längsachse (50) des Kragens drehbar gelagert ist,
- die Schieberbereiche (48) des Schieberelements (46) bei Drehung des Betätigungselements (30) zum Verschließen und Freigeben der ihnen zugeordneten Luftauslassöffnungen (45) längs einer Kurvenbahn bewegbar sind und
- das Luftauslasselement (38) eine Trennwand (62) aufweist, die die Lufteinlassöffnungen (44) zur Trennung von durch diese gelangenden Teilluftströmungen voneinander abschirmt und die sich bis zur Luftauslassöffnung (45) erstreckt.

2. Luftauslassvorrichtung nach Anspruch 1, **dadurch gekennzeichnet, dass** an der Trennwand (62) mindestens ein zylindrisches Ringelement (64,66) gehalten ist, längs dessen Durchmesser die Trennwand (62) verläuft.

3. Luftauslassvorrichtung nach Anspruch 2, **dadurch gekennzeichnet, dass** an der Trennwand (62) mindestens zwei Ringelemente (64,66) gehalten sind, die unterschiedliche Abstände zur Luftauslassöffnung (45) des Luftauslasselements (38) aufweisen.

4. Luftauslassvorrichtung nach Anspruch 2 oder 3, **dadurch gekennzeichnet, dass** jedes Ringelement (64,66) einen der Luftauslassöffnung (45) des Luftauslasselements (38) abgewandten, sich verjüngenden Rand (68,70) aufweist.

5. Luftauslassvorrichtung nach einem der Ansprüche 1 bis 4, **dadurch gekennzeichnet, dass** das Luftauslasselement (38) rotationssymmetrisch ist und einen Mantel (40) aufweist und dass die beiden Lufteinlassöffnungen (44) in dem Mantel (40) ausgebildet sind.

6. Luftauslassvorrichtung nach Anspruch 5, **dadurch gekennzeichnet, dass** der Mantel (40) eine Zylinderwand ist.

7. Luftauslassvorrichtung nach Anspruch 6, **dadurch gekennzeichnet, dass** der Mantel (40) kegelförmig ist.

8. Luftauslassvorrichtung nach einem der Ansprüche 1 bis 7, **dadurch gekennzeichnet, dass** das Schieberelement (46) und das Luftauslasselement (38) im wesentlichen gleichförmig ausgebildet sind.

9. Luftauslassvorrichtung nach Anspruch 8, **dadurch gekennzeichnet, dass** das Schieberelement (46) und das Luftauslasselement (38) jeweils zwei diametral gegenüberliegende Öffnungen (44) aufweisen, die sich über etwa 90° in Umfangsrichtung und/oder über im wesentlichen die gesamte axiale Länge des Mantels (40) erstrecken.

10. Luftauslassvorrichtung nach einem der Ansprüche 1 bis 9, **dadurch gekennzeichnet, dass** das Schieberelement (46) außen an dem Luftauslasselement (38) gelagert ist.

11. Luftauslassvorrichtung nach einem der Ansprüche 1 bis 10, **dadurch gekennzeichnet, dass** das Luftauslasselement (38) von einem einen Teil eines Luftauslasskanal bildenden, eine sphärische Außenfläche aufweisenden Halteelement (14) gehalten ist, das schwenkbar in einem Aufnahmeelement (16) gelagert ist.
